# EUROPEAN PATENT SPECIFICATION

(11) **EP 2 666 973 B1**
(45) Date of publication and mention of the grant of the patent: **17.07.2019**
(21) Application number: 13169015.8
(22) Date of filing: 23.05.2013
(51) Int. Cl.: F01D 25/12, F02C 6/12

(54) **Turbocharger for motor vehicles**
Turbolader für Fahrzeugantriebe
Turbocompresseur pour entraînement de véhicules

(30) Priority: 23.05.2012 IT BO20120280
(43) Date of publication of application: 27.11.2013
(73) Proprietor: ATTI S.p.A. società unipersonale, Bentivoglio (IT)
(72) Inventor: Lelli, Giuseppe, 40010 Bentivoglio (IT)
(74) Representative: Boggio, Luigi

(56) References cited:
- DE-A1- 3 322 436
- DE-B- 1 217 138
- US-A- 2 486 731
- US-A- 4 756 673
- US-A1- 2011 083 433

## Description

The present invention relates to a turbocharger for motor vehicles.

In particular, the present invention relates to a turbocharger of the type comprising a containing casing defining a first chamber adapted to house therein a first impeller, a second chamber adapted to house therein a second impeller, and a third chamber arranged between the first chamber and the second chamber; and a drive shaft, which extends through the three chambers, and is engaged in an angularly fixed manner through the two impellers.

The turbocharger also comprises a first closing plate for separating the second chamber and the third chamber from one another in a fluid-tight manner, and a second closing plate for separating the first chamber and the third chamber from one another in a fluid-tight manner.

Finally, the turbocharger comprises a suction duct for sucking air into the second chamber; a delivery duct for feeding a compressed air flow generated by the second impeller into an internal combustion engine; and a feeding duct for feeding the combustion products
generated in the internal combustion engine into the first chamber.

Since the combustion products fed into the first chamber have a high temperature, the second chamber, the third chamber, and the second impeller are also subject to such a temperature, which may cause deformations to the second chamber and to the second impeller.

Furthermore, the high temperatures in the second chamber cause an increase in volume of the air sucked into the second chamber with a subsequent reduction of the percentage of oxygen contained in the compressed air flow fed to the internal combustion engine and a subsequent loss of power of the internal combustion engine.

To obviate the above-described drawbacks, it is known to obtain a cooling circuit crossed by a cooling fluid in the portion of the containing casing defining the second chamber.

Document US-4756673-A discloses a turbocharger for motor vehicles comprising a containing casing defining at least one first chamber and one second chamber; at least one first closing plate, which is mounted inside the containing casing, so as to separate the first chamber and the second chamber from one another in a fluid-tight manner; a first impeller, which is mounted so as to rotate in the first chamber; a second impeller, which is mounted so as to rotate in the second chamber; a drive shaft, which is engaged in an angularly fixed manner through said first and second impeller; a suction duct for sucking air into the second chamber; a delivery duct for feeding a compressed air flow generated by the second impeller (11) into an internal combustion engine; and a feeding duct for feeding the combustion products generated in the internal combustion engine into the first chamber. The first closing plate is provided with a cooling circuit, which is obtained through the first closing plate and is crossed by a cooling fluid.

Known turbochargers for motor vehicles of the above-described type have certain drawbacks mainly resulting from the fact that running the cooling circuit through the containing casing involves designing and manufacturing relatively complex and costly foundry dies.

Furthermore, the containing casing provided of the cooling circuit is subject to possible cooling fluid leaks, which could be mixed with the air sucked into the second chamber thus compromising the proper operation of the turbocharger.

The object of the present invention is to provide a turbocharger for motor vehicles which is exempt from the above-described drawbacks and is simple and affordable to implement.

According to the present invention, there is provided a turbocharger for motor vehicles according to the accompanying claims.

The present invention will now be described with reference to the accompanying drawings, which illustrate a non-limiting embodiment thereof, in which:
figure 1 is a perspective diagrammatic view, with sectional parts and parts removed for clarity, of a preferred embodiment of the turbocharger of the present invention;
figure 2 is a perspective diagrammatic cross-section of a detail of the turbocharger in figure 1; and
figure 3 is an exploded perspective view of the detail in figure 2.

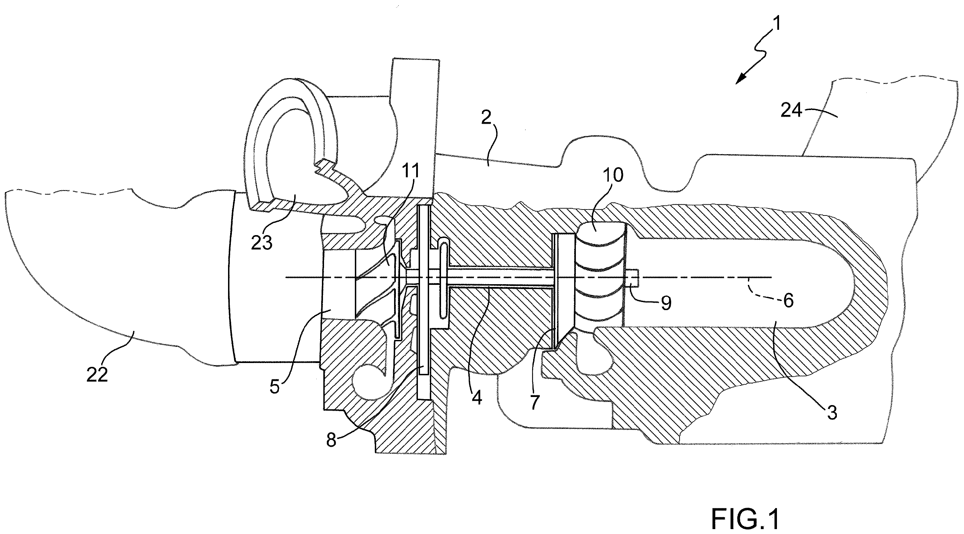

With reference to figure 1, numeral 1 indicates, as a whole, a turbocharger for motor vehicles comprising a containing casing 2 shaped to define three chambers 3, 4, 5 arranged in sequence and in order along a longitudinal axis 6.

The chambers 3 and 4 are separated from one another in a fluid-tight manner by means of a closing plate 7 which is mounted perpendicular to axis 6, and the chambers 4 and 5 are separated from one another in a fluid-tight manner by means of a closing plate 8 which is mounted perpendicular to axis 6 itself.

Turbocharger 1 also comprises a drive shaft 9, which extends through the chambers 3, 4, 5 and is mounted to rotate around axis 6; a first impeller 10, which is arranged in chamber 3, and is coupled to shaft 9 in an angularly fixed manner; and a second impeller 11, which is arranged in chamber 5, and is coupled to shaft 9 itself in an angularly fixed manner.

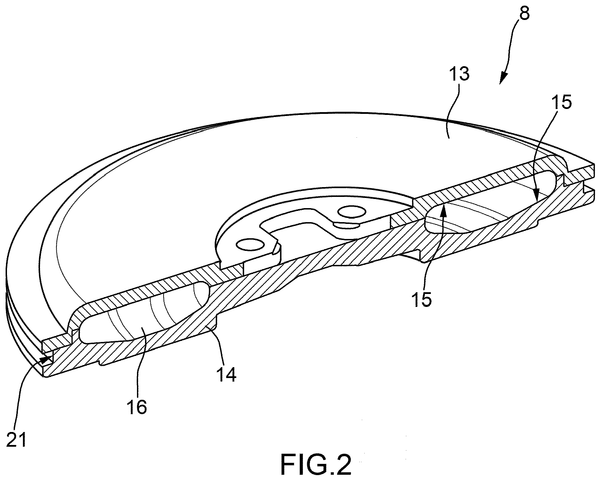

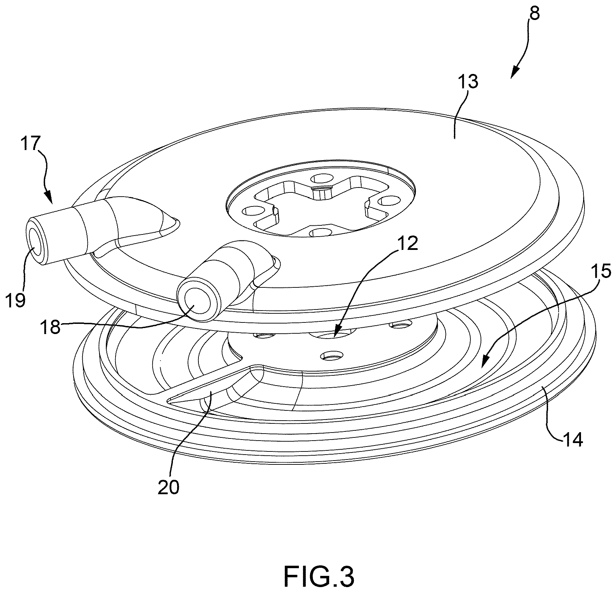

As shown in figures 2 and 3, plate 8 has a central hole 12 which is engaged by shaft 9 in a rotatory manner, and comprises two discs 13, 14 which are connected to one another in a fluid-tight manner, for example, by means of gluing.

Each disc 13, 14 is substantially cup-shaped with concavity facing the other disc 13, 14, and comprises a recess 15 facing recess 15 of the other disc 13, 14 to define a cooling channel 16 crossed by a cooling fluid.

Channel 16 extends around axis 6 along a curvilinear path and according to an angle which is smaller than 360°, and is radially limited by two lateral walls, which are preferably but not necessarily coaxial to each other and to axis 6.

Channel 16 defines part of a cooling circuit 17 also comprising a fitting 18 for letting the cooling fluid into channel 16 and a fitting 19 for letting the cooling fluid out of channel 16.

The fittings 18, 19 are obtained, in this case, on disc 13, and are separated from one another (in clockwise direction in figure 2) in a fluid-tight manner by a dividing baffle 20, which projects inside channel 16 partly from a bottom wall of recess 15 of disc 13 and partly from a bottom wall of recess 15 of disc 14, and prevents the cooling fluid from advancing along channel 16 in clockwise direction in figure 3.

In other words, baffle 20 prevents the cooling fluid from advancing along channel 16 in clockwise direction in figure 3, while it allows the cooling fluid to advance along channel 16 from the inlet fitting 18 to the outlet fitting 19 only in anti-clockwise direction in figure 3.

Obviously, according to a variant not illustrated, baffle 20 may be made in a single piece, to project inside channel 16 from the bottom wall of one of the two discs 13, 14 alone.

Plate 8 also presents an annular groove 21, which extends around axis 6, is obtained along an outer perimeter edge of plate 8, and houses therein a known gasket which is not illustrated, which allows casing 2 and plate 8 to be coupled to one another in a fluid-tight manner.

Turbocharger 1 also comprises a suction duct 22 for sucking air into chamber 5; a delivery duct 23 for feeding a compressed air flow generated by impeller 11 into an internal combustion engine, which is known and not illustrated; and a feeding duct 24 for feeding the combustion products generated in the internal combustion engine (not illustrated) into the first chamber 3.

In use, the combustion products fed into chamber 3 through duct 24 put into rotation impeller 10, the drive shaft 9, and impeller 11, which compresses the air sucked into chamber 5 through duct 22 and feeds a compressed air flow to the internal combustion engine (not illustrated) through duct 23.

The heating of impeller 11 and of the portion of casing 2 defining chamber 5 caused by the high temperatures of the combustion products fed into chamber 3 is limited by the cooling fluid fed along the cooling circuit 17. Accordingly, the temperature of the air fed by impeller 11 along duct 23 and to the internal combustion engine (not illustrated) is relatively low.

Turbocharger 1 has certain advantages mainly resulting from the fact that running the cooling channel 16 through the closing plate 8 allows plate 8 to be divided into the two discs 13 and 14 and therefore involves designing and manufacturing relatively simple and affordable foundry dies and executing relatively simple and affordable founding processes.

## Claims

1. A turbocharger for motor vehicles comprising a containing casing (2) defining at least one first chamber (3) and one second chamber (5); at least one first closing plate (8), which is mounted inside the containing casing (2), so as to separate said first and second chamber (3, 5) from one another in a fluid-tight manner; a first impeller (10), which is mounted so as to rotate in the first chamber (3); a second impeller (11), which is mounted so as to rotate in the second chamber (5); a drive shaft (9), which is engaged in an angularly fixed manner through said first and second impeller (10, 11), and is mounted so as to rotate around a given rotation axis (6); a suction duct (22) for sucking air into the second chamber (5); a delivery duct (23) for feeding a compressed air flow generated by the second impeller (11) into an internal combustion engine; and a feeding duct (24) for feeding the combustion products generated in the internal combustion engine into the first chamber (3); the first closing plate (8) being provided with a cooling circuit (17), which is obtained through the first closing plate (8), is crossed by a cooling fluid, and comprises a cooling channel (16) extending around said rotation axis (6); the first closing plate (8) comprising two circular discs (13, 14), which present, each, a respective recess (15) and are coupled to one another in a fluid-tight manner, so as to allow the two recesses (15) to define said cooling circuit (17); and **characterised in that** the first closing plate (8) presents an inlet (18) for letting the cooling fluid into the cooling channel (16), an outlet (19) for letting the cooling fluid out of the cooling channel (16), and a dividing baffle (20), which is arranged inside the cooling channel (16) between the inlet (18) and the outlet (19), so as to force the cooling fluid along the cooling channel (16) itself with a single-direction motion.

2. A turbocharger according to claim 1, wherein the cooling channel (16) extends around said rotation axis (6) according to an angle that is smaller than 360°.

3. A turbocharger according to claim 1 or 2, wherein the cooling channel (16) is circular, and is radially limited by two lateral walls which are substantially coaxial to one another and to the rotation axis (6).

4. A turbocharger according to any of the previous claims, wherein the first closing plate (8) presents an annular groove (21), which is obtained along its outer perimeter edge, and an annular gasket, which is housed inside the annular groove (21) itself.

5. A turbocharger according to any of the previous claims, wherein the first closing plate (8) presents a central hole (12), which is engaged in a rotatory manner by said drive shaft (9).

6. A turbocharger according to any of the previous claims, wherein the containing casing (2) is shaped so as to define a third chamber (4), which is arranged between said first and second chamber (3, 5), is run through by said drive shaft (9), and is separated from the second chamber (5) in a fluid-tight manner by means of said first closing plate (8); a second closing plate (7) being provided to separate said first and third chamber (3, 4) from one another in a fluid-tight manner.

## Patentansprüche

1. Turbolader für Kraftfahrzeuge, der Folgendes umfasst: ein Aufnahmegehäuse (2), das wenigstens eine erste Kammer (3) und eine zweite Kammer (5) definiert; wenigstens eine erste Verschlussplatte (8), die in dem Aufnahmegehäuse (2) montiert ist, um die erste und die zweite Kammer (3, 5) auf fluiddichte Weise voneinander zu trennen; ein erstes Flügelrad (10), das so montiert ist, dass es sich in der ersten Kammer (3) dreht; ein zweites Flügelrad (11), das so montiert ist, dass es sich in der zweiten Kammer (5) dreht; eine Antriebswelle (9), die drehfest mit dem ersten und dem zweiten Flügelrad (10, 11) in Eingriff ist und so montiert ist, dass sie sich um eine gegebene Drehachse (6) dreht; einen Saugstutzen (22) zum Ansaugen von Luft in die zweite Kammer (5); einen Förderstutzen (23) zum Einspeisen einer durch das zweite Flügelrad (11) erzeugten Strömung verdichteter Luft in eine Brennkraftmaschine; und einen Einspeisestutzen (24) zum Einspeisen der in der Brennkraftmaschine erzeugten Verbrennungsprodukte in die erste Kammer (3); wobei durch die erste Verschlussplatte (8), die mit einem Kühlungskreis (17) versehen ist, der durch die erste Verschlussplatte (8) gebildet ist, ein Kühlungsfluid fließt und die einen Kühlungskanal (16) aufweist, der um die Drehachse (6) verläuft; wobei die erste Verschlussplatte (8) zwei kreisförmige Scheiben (13, 14) aufweist, die jeweils eine entsprechende Aussparung (15) aufweisen und miteinander auf fluiddichte Weise gekoppelt sind, um zu ermöglichen, dass die beiden Aussparungen (15) den Kühlungskreis (17) definieren; **dadurch gekennzeichnet, dass** die erste Verschlussplatte (8) einen Einlass (18) zum Einlassen des Kühlungsfluids in den Kühlungskanal (16), einen Auslass (19) zum Auslassen des Kühlungsfluids aus dem Kühlungskanal (16) und eine Unterteilungswand (20), die in dem Kühlungskanal (16) zwischen dem Einlass (18) und dem Auslass (19) so angeordnet ist, dass das Kühlungsfluid längs des Kühlungskanals (16) zu einer Bewegung in nur einer Richtung gezwungen wird, umfasst.

2. Turbolader nach Anspruch 1, wobei der Kühlungskanal (16) um die Drehachse (6) über einen Winkel von kleiner als 360° verläuft.

3. Turbolader nach Anspruch 1 oder 2, wobei der Kühlungskanal (16) kreisförmig ist und radial durch zwei Seitenwände begrenzt ist, die relativ zueinander und in Bezug auf die Drehachse (6) im Wesentlichen koaxial sind.

4. Turbolader nach einem der vorhergehenden Ansprüche, wobei die erste Verschlussplatte (8) eine ringförmige Nut (21) aufweist, die längs ihrer äußeren Umfangskante ausgebildet ist, und eine ringförmige Dichtung aufweist, die in der ringförmigen Nut (21) aufgenommen ist.

5. Turbolader nach einem der vorhergehenden Ansprüche, wobei die erste Verschlussplatte (8) ein Mittelloch (12) aufweist, das mit der Antriebswelle (9) in einem Dreheingriff ist.

6. Turbolader nach einem der vorhergehenden Ansprüche, wobei das Aufnahmegehäuse (2) so geformt ist, dass es eine dritte Kammer (4) definiert, die zwischen der ersten und der zweiten Kammer (3, 5) angeordnet ist, durch die die Antriebswelle (9) verläuft und die von der zweiten Kammer (5) auf fluiddichte Weise mittels der ersten Verschlussplatte (8) getrennt ist; wobei eine zweite Verschlussplatte (7) vorgesehen ist, um die erste und die dritte Kammer (3, 5) auf fluiddichte Weise voneinander zu trennen.

## Revendications

1. Un turbocompresseur pour véhicules à moteur comprenant un carter conteneur (2) définissant au moins une première chambre (3) et une deuxième chambre (5); au moins une première plaque de fermeture (8), qui est montée à l'intérieur du boîtier de confinement (2), de manière à séparer lesdites première et deuxième chambres (3, 5) l'une de l'autre de manière étanche aux fluides; une première turbine (10) qui est montée de manière à tourner dans la première chambre (3); une seconde turbine (11) qui est montée de manière à tourner dans la deuxième chambre (5); un arbre d'entraînement (9) qui est engagé de manière fixée angulairement à travers lesdites première et seconde turbines (10, 11), et est monté de manière à tourner autour d'un axe de rotation donné (6); un conduit d'aspiration (22) pour aspirer de l'air de la deuxième chambre (5); un conduit de refoulement (23) pour alimenter un flux d'air comprimé généré par la seconde turbine (11) dans un moteur à combustion interne; et un conduit d'alimentation (24) pour alimenter les produits de combustion générés dans le moteur à combustion interne dans la première chambre (3); la première plaque de fermeture (8) étant dotée d'un circuit de refroidissement (17), qui est obtenu à travers la première plaque de fermeture (8) et est traversé par un fluide de refroidissement, et comprend un canal de refroidissement (16) s'étendant autour dudit axe de rotation (6) ; la première plaque de fermeture (8) comprenant deux disques (13, 14), qui présentent chacun un évidement respectif (15) et sont couplés l'un à l'autre de manière étanche au fluide, de manière à permettre aux deux évidements (15) de définir ledit circuit de refroidissement (17) ; et **caractérisé en ce que** la première plaque de fermeture (8) présente une entrée (18) pour laisser passer le fluide de refroidissement dans le canal de refroidissement (16), une sortie (19) pour laisser sortir le fluide de refroidissement du canal de refroidissement (16), et un déflecteur de division (20), qui est agencé à l'intérieur du canal de refroidissement (16) entre l'entrée (18) et la sortie (19), de manière à forcer le fluide de refroidissement à suivre un mouvement unidirectionnel le long du canal de refroidissement (16).

2. Un turbocompresseur selon la revendication 1, dans lequel le canal de refroidissement (16) s'étend autour dudit axe de rotation (6) selon un angle inférieur à 360°.

3. Un turbocompresseur selon la revendication 1 ou 2, dans lequel le canal de refroidissement (16) est circulaire et radialement limité par deux parois latérales qui sont sensiblement coaxiales l'une à l'autre et à l'axe de rotation (6).

4. Un turbocompresseur selon l'une quelconque des revendications précédentes, dans lequel la première plaque de fermeture (8) présente une gorge annulaire (21), qui est obtenue le long de son bord périmétrique extérieur, et un joint annulaire, logé à l'intérieur de la gorge annulaire (21) elle-même.

5. Un turbocompresseur selon l'une quelconque des revendications précédentes, dans lequel la première plaque de fermeture (8) présente un trou central (12), qui est engagé de manière rotative par ledit arbre d'entraînement (9).

6. Un turbocompresseur selon l'une quelconque des revendications précédentes, dans lequel le carter conteneur (2) est conformé de manière à définir une troisième chambre (4), qui est agencée entre lesdites première et deuxième chambres (3, 5), est traversée par ledit arbre d'entraînement (9) et est séparé de la deuxième chambre (5) de manière étanche aux fluides au moyen de ladite première plaque de fermeture (8); une seconde plaque de fermeture (7) étant prévue pour séparer lesdites première et troisième chambres (3, 4) l'une de l'autre de manière étanche aux fluides.
